(19) Europäisches Patentamt
European Patent Office
Office européen des brevets

(11) EP 0 548 727 B1

(12) **EUROPÄISCHE PATENTSCHRIFT**

(45) Veröffentlichungstag und Bekanntmachung des Hinweises auf die Patenterteilung:
**01.04.1998 Patentblatt 1998/14**

(51) Int Cl.6: **C08G 18/42**, C08G 18/46, C09D 175/06

(21) Anmeldenummer: **92121242.9**

(22) Anmeldetag: **14.12.1992**

(54) **Wasserverdünnbares, urethanmodifiziertes und Hydroxylgruppen enthaltendes selbstvernetzendes Bindemittel und Zubereitungen davon**

Water-diluable, urethane-modified, hydroxyl groups-containing, self-curing binder and compositions comprising the same

Liant autoréticulable, diluable dans l'eau, à modification uréthane, à groupes hydroxyle et compositions le contenant

(84) Benannte Vertragsstaaten:
**AT BE CH DE ES FR GB IT LI NL SE**

(30) Priorität: **21.12.1991 DE 4142734**

(43) Veröffentlichungstag der Anmeldung:
**30.06.1993 Patentblatt 1993/26**

(73) Patentinhaber: **HOECHST AKTIENGESELLSCHAFT**
**65926 Frankfurt am Main (DE)**

(72) Erfinder:
- **Exner, Reiner, Dr.**
  **W-6702 Bad Dürkheim (DE)**
- **Klein, Heinz-Peter, Dr.**
  **W-6500 Mainz-Laubenheim (DE)**
- **Schwab, Michael, Dr.**
  **W-6272 Niedernhausen-Oberjosbach (DE)**
- **Walz, Gerd, Dr.**
  **W-6200 Wiesbaden (DE)**
- **Frank, Udo, Dr.**
  **W-6507 Ingelheim (DE)**

(74) Vertreter: **Zounek, Nikolai, Dipl.-Ing.**
**Patentsanwaltskanzlei Zounek,**
**Industriepark Kalle Albert,**
**Gebäude H287**
**65203 Wiesbaden (DE)**

(56) Entgegenhaltungen:
**EP-A- 0 022 452**
**EP-A- 0 133 223**
**EP-A- 0 147 674**
**EP-A- 0 220 440**
**EP-A- 0 234 362**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 548 727 B1

Printed by Jouve, 75001 PARIS (FR)

## Beschreibung

Die vorliegende Erfindung betrifft die Verwendung, urethanharzmodifizierter, hydroxylgruppenhaltiger Bindemittel, die in einem (überwiegend) wäßrigen Medium dispergiert und/oder gelöst sind, in Einbrennlacken zur Herstellung von Lackfilmen und Beschichtungen.

Übliche Einbrennsysteme basieren oftmals auf der Kombination eines Bindemittels mit einer entsprechenden Vernetzungskomponente. Es kann dabei zu Unverträglichkeiten zwischen diesen Komponenten kommen. Bei wäßrigen Systemen kommt hinzu, daß die Vernetzungskomponente in der Regel auch wasserverträglich sein muß oder durch die Emulgatorwirkung des Bindemittels in der wäßrigen Phase stabilisiert wird.

In der EP-A 0 133 223 werden teilblockierte mehrfunktionelle Isocyanate beschrieben, die mit einem speziellen Blockierungsmittel, das Strukturen von in 5-Stellung unsubstituierten 1,3-Dioxan-4,6-dionen (Malonsäureestern mit einem geminalen Diol) enthält, gebildet werden. Diese Blockierungsmittel bewirken die Löslichkeit oder Dispergierbarkeit der so blockierten Isocyanate in wäßrig-alkalischem Medium. Die Verwendung dieser Isocyanate zur Herstellung von Polyurethanen, Einbrennlacken und wäßrigen Polyisocyanat-Lösungen und -Dispersionen wird beschrieben.

In der vorliegenden Erfindung wird die Unverträglichkeit zwischen Vernetzer (in der Erfindung Polyisocyanate) und Bindemittel (in der Erfindung anionische Gruppen enthaltendes Polyesterpolyol) durch die partielle kovalente Bindung der Isocyanat-Komponenten an das Polyesterharz vermieden, so daß ein selbstvernetzendes Einkomponenten-Einbrennsystem vorliegt.

Die Lagerstabilität des überwiegend in Wasser dispergierten Bindemittels der vorliegenden Erfindung ist dadurch wesentlich größer als die einer Kombination des Polyesterpolyols mit dem entsprechend vollständig verkappten Polyisocyanat.

Gegenstand der Erfindung ist die Verwendung eines wasserverdünnbaren, urethanmodifizierten und Hydroxylgruppen enthaltenden Bindemittels in Einbrennlacken, dargestellt durch Umsetzung eines Hydroxylgruppen und neutralisierte und/oder neutralisierbare Säuregruppen enthaltenden Polyesters und eines teilweise blockierten Polyisocyanats, wobei das Polyisocyanat in solchen Mengen eingesetzt wird, daß der Hydroxylgruppengehalt des Festharzes 3 bis 350 mmol/100 g beträgt, und der Blockierungsgrad des Polyisocyanats so gewählt wird, daß der Massenanteil an blockierten Isocyanatgruppen (berechnet als NCO, molare Masse = 42 g/mol) im Festharz zwischen 0,5 und 15 % beträgt. Bevorzugt weist das Bindemittel einen Hydroxylgruppengehalt von 5 bis 170 mmol in 100 g Festharz auf. Der Massenanteil an blockierten Isocyanatgruppen im Festharz beträgt bevorzugt 0,5 bis 15 %.

Um die Verdünnbarkeit mit Wasser zu erreichen, enthält das Harz neutralisierbare und/oder neutralisierte saure Gruppen, im allgemeinen Carbon-, Sulfonoder Phosphonsäuregruppen. Der Gehalt an diesen Gruppen liegt üblicherweise zwischen 5 und 200, vorzugsweise zwischen 10 und 90 mmol in 100 g Bindemittel-Festharz.

Die als Ausgangsmaterial dienenden Polyesterpolyole werden nach üblichen Verfahren hergestellt durch Kondensation von Polycarbonsäuren, Polyalkoholen und Hydroxycarbonsäuren, die alle gegebenenfalls weitere Carbonsäure-, Sulfonsäure- oder Phosphonsäuregruppen enthalten können.

Die Polycarbonsäuren können aliphatischer, cycloaliphatischer, aromatischer und/oder heterocyclischer Natur sein und gegebenenfalls , z.B. durch Halogenatome, substituiert sein. Als Beispiele für solche Carbonsäuren und deren Derivate seien genannt: Bernsteinsäure, Adipinsäure, Korksäure, Azelainsäure, Sebacinsäure, Phthalsäure, Terephthalsäure, Sulfoterephthalsäure, Sulfoisophthalsäure, Sulfophthalsäure, Isophthalsäure, Trimellithsäure, Pyromellithsäure, Tetrahydrophthalsäure, Hexahydrophthalsäure, Di- und Tetrachlorphthalsäure,Endomethylentetrahydrophthalsäure und ihr Hexachlorderivat, Glutarsäure, Maleinsäure, Fumarsäure, dimere und trimere Fettsäuren. Anstelle dieser Säuren können auch ihre Anhydride, soweit sie existieren, verwendet werden.

Als Polyalkohole werden bevorzugt niedermolekulare Polyole, Polyhydroxy-polyether, Polylacton-polyole und Polycarbonat-polyole verwendet. Als niedermolekulare Polyole kommen zum Beispiel Ethandiol, die verschiedenen Propan-, Butan-, Hexandiole, Dimethylolcylcohexan, 2,2-Bis(4-hydroxycyclohexyl)propan, Diethylenglykol, Triethylenglykol, Glycerin, Trimethylolethan oder -propan, Hexantriol, Pentaerythrit, Dipentaerythrit oder Sorbit infrage, weiterhin werden niedermolekulare Polyole, vorzugsweise Diole, eingesetzt, die noch eine ionisierbare Gruppe in Form der Carbonsäure-, Sulfonsäure- oder Phoshonsäuregruppe enthalten. Diese Säuregruppen können frei und/oder in Salzform vorliegen. Beispiele für diese Gruppe von Monomeren sind $\alpha$-$C_2$-$C_{10}$-Bishydroxycarbonsäuren wie z.B. Dihydroxypropionsäure, Dimethylolpropionsäure, Dihydroxyethylpropionsäure, Dimethylolbuttersäure, Weinsäuren, Dihydroxymaleinsäure, Dihydroxybenzoesäure oder 3-Hydroxy-2-hydroxymethylpropansulfonsäure, Dihydroxybutansulfonsäuren.

Als Polyhydroxy-polyether kommen Verbindungen der Formel

$$H\text{-[- O - (CHR)}_n\text{-]}_m\text{ OH}$$

infrage, in der

R Wasserstoff oder ein niedriger Alkylrest, gegebenenfalls mit verschiedenen Substituenten, ist,
n eine Zahl von 2 bis 6 und
m eine Zahl von 10 bis 120 ist.

Beispiele sind Poly(oxytetramethylen)glykole, Poly(oxyethylen)glykole und Poly(oxypropylen)glykole. Die bevorzugten Polyhydroxy-polyether sind Poly(oxypropylen)glykole mit einem Molekulargewicht im Bereich von 400 bis 5000.

Die von Lactonen abgeleiteten Polylactonpolyole erhält man beispielsweise durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\displaystyle O}{\overset{\|}{C}}-(CHR)_n-CH_2O-$$

entsprechen, in der n bevorzugt 4 bis 6 ist und der Substituent R Wasserstoff, ein Alkylrest, ein Cycloalkylrest oder ein Alkoxyrest ist, wobei kein Substituent mehr als 12 Kohlenstoffatome enthält.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden:

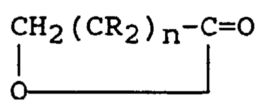

in der n und R die bereits angegebene Bedeutung haben.

Die bei der Erfindung bevorzugten Lactone sind die ε-Caprolactone, bei denen n den Wert 4 hat. Das am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Polyolen sind Ethylenglykol, 1,3-Propandiol, 1,4-Butandiol, Hexandiol-1,6, Dimethylolcyclohexan, Trimethylolpropan und Pentaerythrit.

Die Polycarbonat-polyole bzw. Polycarbonatdiole sind Verbindungen, die der allgemeinen Formel

$$HO-R-(\ O-\overset{\displaystyle O}{\overset{\|}{C}}-O-R-)_n-OH$$

entsprechen, worin R einen Alkylenrest bedeutet. Diese OH-funktionellen Polycarbonate lassen sich durch Umsetzung von Polyolen wie Propandiol-1,3, Butandiol-1,4, Hexandiol-1,6, Diethylenglykol, Triethylenglykol, 1,4-Bishydroxymethylcyclohexan, 2,2-Bis(4-hydroxycyclohexyl)propan, Neopentylglykol, Trimethylolpropan, Pentaerythrit, mit Dicarbonaten, wie Dimethyl-, Diethyl- oder Diphenylcarbonat, oder Phosgen herstellen. Gemische solcher Polyole können ebenfalls eingesetzt werden.

Als bevorzugte Beispiele für Hydroxycarbonsäuren seien Salicylsäure, Sulfosalicylsäure und deren Salze genannt.

Die Herstellung der Polyesterpolyole erfolgt nach bekannten Methoden in einem mehrstufigen Verfahren in Abhängigkeit von der Veresterungsgeschwindigkeit der Carbonsäuren. Für den bevorzugten Fall der Herstellung eines Polyesterpolyols aus einem Gemisch von aromatischen und aliphatischen Dicarbonsäuren werden zunächst in Gegenwart eines Katalysators die aromatischen Carbonsäuren mit den hydroxyfunktionellen Komponenten verestert und anschließend die aliphatischen carboxylgruppenhaltigen Reaktanden eingeführt, da bekanntermaßen die Veresterungsgeschwindigkeit aromatischer Carbonsäuren, wie z.B. Isophthalsäure, wesentlich geringer ist als die der Dimethylolpropion-säure und diese wiederum geringer als z.B. die der Adipinsäure.

Für die Polyesterpolyole mit Sulfonsäuregruppen kann es, um eine möglichst quantitative Kondensation des Sulfomonomeren zu erreichen, erforderlich sein, die Synthese ebenfalls in einem mehrstufigen Verfahren durchzuführen. Es werden dazu in Gegenwart von Katalysatoren zunächst die gesamten hydroxylfunktionellen Komponenten mit den Sulfomonomeren und gegebenenfalls mit den aromatischen, carbonsäurehaltigen Komponenten umgesetzt, so daß bei der Kondensation 95 % der für einen quantitativen Umsatz berechneten Destillatmenge erhalten werden. Anschließend kommen gegebenenfalls die aliphatischen Carbonsäurekomponenten zur Reaktion, wobei die Kondensation bis zu einem Gehalt an freien Säuregruppen von kleiner als 18 meq (COOH)/100 g durchgeführt wird.

Die Polykondensationsreaktion findet bei Temperaturen zwischen 150 und 230 °C, bevorzugt zwischen 160 und 210 °C, statt. Als Katalysatoren kommen bevorzugt Organometallverbindungen, insbesondere zink-, zinn- oder titanhaltige Verbindungen wie z.B. Zinkacetat, Dibutylzinnoxid oder Tetrabutyltitanat in Betracht. Die Menge an Katalysator beträgt bevorzugt 0.1 bis 1.5 Gew.-% des Gesamtansatzes.

Die so erhaltenen Polyesterpolyole werden dann mit einem teilweise verkappten Polyisocyanat umgesetzt. Als Polyisocyanate kommen alle hier bekannten Verbindungen dieser Art in Frage, beispielsweise Trimethylendiisocyanat, Tetramethylendiisocyanat, Pentamethylendiisocyanat, Hexamethylendiisocyanat, Propylendiisocyanat, Ethylendiisocyanat, 2,3-Dimethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, Bis- (4-isocyanatocyclophenyl)-methan, 4,4'-Diisocyanatodiphenylether, 2,3-Bis-(8-isocyanatooctyl)-4-octyl-5-hexylcyclohexen, Tri- oder Tetramethylxylylendiisocyanat oder Gemische dieser Verbindungen.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophonatgruppen, Isocyanuratgruppen, Urethangruppen, acylierte Harnstoffgruppen oder Biuretgruppen aufweisen.

Geeignete Polyisocyanate sind schließlich auch solche höherfunktionellen Isocyanate, die durch Umsetzung eines Diisocyanates mit einem Polyol (z.B. Trimethylolpropan, Pentaerythrit) dargestellt werden, sowie deren ethoxylierte und/oder propoxylierte Derivate mit einem Alkoxylierungsgrad von 0,5 bis 4,5 Ethylenoxid und/oder Propylenoxid je Hydroxylfunktion.

Als Verkappungsmittel eignen sich aliphatische, cycloaliphatische oder alkylaromatische (einwertige) Alkohole z. B. niedere aliphatische Alkohole wie Methyl-, Ethylalkohol, die verschiedenen Propyl-, Butyl- und Hexylalkohole, Heptyl-, Octyl-, Nonyl-, Decylalkohol und ähnliche, ferner ungesättigte Alkohole wie Propargylalkohol oder Allylalkohole, cycloaliphatische Alkohole wie Cyclopentanol, Cyclohexanol, alkylaromatische Alkohole wie Benzylalkohol, p-Methyl-, p-Methoxy- und p-Nitrobenzylalkohol und Monoether von Glykolen wie Ethylenglykolmonoethylether, -monobutylether und ähnliche. Weitere Verkappungsmittel sind Phenole, Ketoxime, zweckmäßigerweise mit 3 bis 20 C-Atomen, vorzugsweise 3 bis 10 C-Atomen, wie Acetonoxim, Methylethylketonoxim (=Butanonoxim), Hexanonoxim (wie Methyl-Butylketonoxim), Heptanonoxim (wie Methyl-n-Amylketonoxim), Octanonoxim und Cyclohexanonoxim, CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Aminoalkohole wie Diethylethanolamin.

Die Polyisocyanate werden nach an sich bekannten Methoden mit einer solchen Menge des Verkappungsmittels umgesetzt, daß das Verhältnis von freien Isocyanatgruppen zu den verkappten Isocyanatgruppen 1:4 bis 1:0,5 beträgt.

Diese teilweise verkappten Polyisocyanate werden dann nach bekannten Methoden mit dem zuvor beschriebenen Polyesterpolyol umgesetzt und zwar in solchen Gewichtsverhältnissen, daß das Endprodukt die eingangs definierten Parameter aufweist. Eventuell vorhandene freie Säuregruppen werden dann abschließend ganz oder teilweise neutralisiert. Dazu dienen wäßrige Lösungen von Alkalihydroxiden oder Amine, zum Beispiel Trimethylamin, Triethylamin, Dimethylanilin, Diethylanilin, Triphenylamin, Dimethylethanolamin, Aminomethylpropanol, Dimethylisopropanolamin oder Ammoniak.

Falls es die relativen Reaktivitäten des Polyesterpolyols und des Verkappungsmittels gegenüber dem Polyisocyanat zulassen, bestehen auch die beiden folgenden Verfahrensmöglichkeiten:

- zu dem mit dem Polyesterpolyol vorgelegten Verkappungsmittel gibt man, gegebenenfalls in Gegenwart eines Katalysators, das Polyisocyanat und kann so, bei entsprechender Selektivität, ebenfalls das beanspruchte Bindemittel erhalten.

- das Polyesterpolyol wird, gegebenenfalls in Gegenwart eines Katalysators, mit dem Polyisocyanat umgesetzt, bis nur noch die geforderten freien OH-Äquivalente vorliegen. Zu diesem NCO-funktionellen Polymer gibt man dann das Verkappungsmittel und kann so die Isocyanatgruppen blockieren, um das beanspruchte Bindemittel zu erhalten.

Die wäßrigen Dispersionen der Bindemittel werden erfindungsgemäß verwendet zur Herstellung von Beschichtungssystemen, als Bindemittel für wasserverdünnbare Klebstoffe oder als Harze für Druckfarben.

Sie sind gegebenenfalls, bei entsprechender Verträglichkeit, kombinierbar mit anderen wäßrigen Kunststoffdispersionen und/oder -lösungen, z.B. Acryl- und/oder Methacrylpolymerisaten, Polyurethan, Polyharnstoff-, Polyester- sowie Epoxidharzen, Thermoplasten auf Basis von Polyvinylacetat, -vinylchlorid, -vinylether, -chloropren, -acrylnitril, Ethylen-Butadien-Styrol-Copolymerisaten.

Die erfindungsgemäß eingesetzten Bindemittel lassen sich auf die verschiedensten Substrate, z.B. Keramik, Holz, Glas, Beton, vorzugsweise Kunststoffe wie Polycarbonat, Polystyrol, Polyvinylchlorid, Polyester, Poly(meth)acrylate, Acrylnitril-Butadien-Styrol-Polymerisate und dergleichen, sowie ebenfalls vorzugsweise Metalle und Legierungen wie Eisen, Kupfer, Aluminium, Stahl, Zinn, Zink, Titan, Magnesium, Messing, Bronze und dergleichen, aufbringen.

Die erfindungsgemäß eingesetzten Bindemittel sind z.B. für die Herstellung von Lackfilmen, Überzügen und/oder Zwischenbeschichtungen für die verschiedensten Anwendungsgebiete geeignet. Nach Zusatz üblicher Lackadditive wie Verlaufs-, Netz-, und Dispergierhilfsmittel sowie üblicher Pigmentzubereitungen ($TiO_2$, $BaSO_4$), eignen sie sich vor allem als wäßrige Einbrenn-Füllerlacke, die - insbesondere in der Automobilindustrie - als Zwischenschicht zwischen Grundierung und Decklack aufgebracht werden, wobei unter sonst üblichen Einbrennbedingungen bei Temperaturen von 70 bis 200 °C, insbesondere von 100 bis 180 °C, eingebrannt bzw. forciert getrocknet wird. Im Vergleich mit am Markt eingesetzten wäßrigen Füllerlacken zeichnen sie sich durch sehr guten Steinschlagschutz, sehr gute Feuchtwarmbeständigkeit und sehr gute optische Eigenschaften (Glanz, Oberflächenstruktur) aus.

Obwohl bei der Formulierung von wasserverdünnbaren Lacken mit den Bindemitteln der Zusatz einer Vernetzungskomponente nicht zwingend erforderlich ist, können, bei gegebener Verträglichkeit, dennoch weitere, in der Lacktechnik übliche Vernetzer, wie z.B. wasserlösliche oder - emulgierbare Melamin- oder Benzoguanaminharze, wasseremulgierbare Polyisocyanate oder wasseremulgierbare Präpolymeren mit endständigen Isocyanatgruppen, wasserlösliche oder - dispergierbare Polyaziridine und blockierte Polyisocyanate, zugegeben werden.

Wegen des hohen Glanzes kann mit den Bindemitteln bei Wahl geeigneter Pigmente auch eine gute Decklackqualität erreicht werden. Voraussetzung ist dann allerdings der Einsatz nicht gilbender Polyisocyanate (z.B. aliphatische Isocyanate). Kurzbewitterungstests zeigen sehr gute Ergebnisse.

Ein besonderer Vorteil der Bindemittel liegt in ihrer Lagerstabilität (Tab. 3).

## Beispiele

### 1. Polyester

Die Herstellung der Polyesterpolyole erfolgt in einem 41-Vierhalskolben mit Ankerrührer, $N_2$-Zuleitung, Temperaturfühler und einer Füllkörperkolonne (ca. 20 cm Länge, 3 cm Durchmesser) mit Kopfthermometer und absteigendem Kühler unter $N_2$-Atmosphäre.

### Polyester 1

1241 g Hexandiol (HD), 365 g Neopentylglykol (NPG), 440 g Trimethylolpropan (TMP), 312 g Sulfoisophthalsäuredimethylester-Natriumsalz (5-SIP-DME-Na) und 3 g wasserfreies Zinkacetat werden bei 170°C bis 220°C und einer max. Kopftemperatur von 65°C kondensiert bis 50 g Destillat erhalten werden. Man kühlt auf 140°C ab, gibt 445 g Terephthalsäure (TPS), 891 g Isophthalsäure (IPS) und 2,6 g Dibutylzinnoxid (DBTO) zu und kondensiert bei 200°C bis ein Gehalt an Carboxylgruppen von 26 meq (COOH)/100g erreicht ist. Man kühlt auf 140°C-ab, gibt 706 g Adipinsäure (ADPS) zu und kondensiert bei Temperaturen von 165 bis 220°C (max. Kopftemperatur 100°C) bis zu einem Gehalt an Carboxylgruppen von 7 meq (COOH)/100g.

### Polyester 2

665 g Hexandiol, 195 g Neopentylglykol und 235 g Trimethylolpropan werden aufgeschmolzen, nachfolgend gibt man bei 100°C 210 g Terephthalsäure und 1,2 g DBTO zu und kondensiert bei 220°C und einer maximalen Kopftemperatur von 100°C bis eine klare Schmelze vorliegt. Man kühlt auf 160°C ab, gibt 455 g Isophthalsäure und weitere 1,2 g DBTO zu und kondensiert bis ein Gehalt an Carboxylgruppen von 35 meq (COOH)/100 g erreicht ist. Anschließend wird auf 130 °C abgekühlt und 910 g Adipinsäure sowie 505 g Dimethylolpropionsäure (DMPS) zugegeben und bei

160°C bis 200°C (maximale Kopftemperatur 100°C) bis zu einem Wert von 90 meq (COOH)/100 g kondensiert.

**Polyester 3**

500 g Hexandiol, 520 g Neopentylglykol und 235 g Trimethylolpropan werden aufgeschmolzen und anschließend werden bei 100°C 300 g Terephthalsäure, 450 g Isophthalsäure und 2,5 g DBTO zugegeben. Man kondensiert bei 190°C bis 200°C bis zu einem Gehalt an Carboxylgruppen von 14 meq (COOH)/100 g, kühlt auf 140°C ab, gibt 900 g Adipinsäure zu und kondensiert bei 190°C bis 200°C bis zu einem Wert von 133 meq (COOH)/100 g. Anschließend wird auf 140°C abgekühlt, 300 g Dimethylolpropionsäure zugegeben und bei 170°C bis 180°C (maximale Kopftemperatur 100°C) bis zu einem Gehalt an Carboxylgruppen von 100 meq (COOH)/100 g kondensiert.

**Polyester 4**

500 g Hexandiol, 400 g Neopentylglykol und 350 g Trimethylolpropan werden aufgeschmolzen. Bei 100°C gibt man 300 g Terephthalsäure, 450 g Isophthalsäure und 2,5 g DBTO zu und kondensiert bei 190°C bis 200°C bis zu einem Gehalt an Carboxylgruppen von 7 meq (COOH)/100 g. Man kühlt auf 140°C ab, gibt 900 g Adipinsäure und 300 g Dimethylolpropionsäure zu und kondensiert bei 160 bis 170°C bis zu einem Gehalt an freien Carboxylgruppen von 128 meq (COOH)/100 g. Anschließend wird auf 140°C abgekühlt ein Vakuum von 100 mbar angelegt, bis ein Wert von 110 meq (COOH)/100 g erreicht ist (ca. 30 min).

**2. Selbstvernetzende - urethanmodifizierte - Bindemittel (SUB)**

Die Synthese der Bindemittel erfolgt in einem 21-Vierhalskolben mit Rückflußkühler und Temperaturfühler.

**SUB 1**

Zu 43,2 g Malonsäurediethylester, 0.8 g Natriummethylat und 74,0 g Methylethylketon werden in 7 min. 75,0 g Diphenylmethan-4,4'-diisocyanat (MDI) zugegeben und unter Kühlung bei 45°C gerührt, bis ein NCO-Gehalt von 5,5 % erreicht ist. Anschließend gibt man die Lösung von 269,5 g Polyester 1 in 92,5 g Methylethylketon in 2 min. zu, steigert die Temperatur auf 50°C und rührt bis zum NCO-Gehalt von < 0,1% . Nach der weiteren Verdünnung mit 54,4 g Butylglykol/Isopropanol (Gewichtsverhältnis 3/1) wird mit 675 g, auf 50 °C erwärmtem, entmineralisiertem Wasser dispergiert. Bei 250 mbar und 60°C werden 170 g Methylethylketon aus der wässrigen Phase abdestilliert.

**SUB 2**

Zu 27,5 g Methylethylketoxim (MEK-oxim), 0,4 g Dibutylzinndilaurat (DBTDL) und 55,6 g Methylethylketon werden in 2 min. 66,6 g Isophorondiisocyanat (IPDI) zudosiert und unter Kühlung bei 35°C gerührt, bis ein NCO-Gehalt von 8,5 % erreicht ist. Anschließend gibt man die Lösung von 294 g Polyester 2 in 110 g Methylethylketon in 3 min. zu, steigert die Temperatur auf 50°C und rührt bis zum NCO-Gehalt von < 0,1% . Nach der weiteren Verdünnung mit 54,4 g Butylglykol/Isopropanol (Gewichtsverhältnis 3/1) wird mit 20,0 g Triethylamin (TEA) neutralisiert und anschließend mit 675 g, auf 60 ° erwärmtem, entmineralisiertem Wasser dispergiert. Bei 200 mbar und 60°C werden 170 g Methylethylketon aus der wässrigen Phase abdestilliert.

**SUB 3**

Zu 1110 g Isophorondiisocyanat und 0,75 g DBTDL gibt man unter Kühlung bei 25°C bis 30°C über einen Zeitraum von 75 min 435 g Methylethylketoxim, erhöht anschließend die Temperatur auf 40°C und rührt noch 1 h nach. Man erhält so das halbseitig methylethylketoximverkappte Isophorondiisocyanat.

55 g N-Methylpyrrolidon, 237,6 g Polyester 3 und 186,9 g halbseitig verkapptes Isophorondiisocyanat, wie zuvor beschrieben, werden bei 60 °C gerührt, bis ein NCO-Gehalt von 0,4 % erreicht ist. Anschließend gibt man 21,1 g Dimethylethanolamin (DMEA) zu, rührt nochmals eine Stunde bei 60°C und dispergiert mit 715 g, auf 60 °C erwärmtem, entmineralisiertem Wasser.

**SUB 4**

42,0 g N-Methylpyrrolidon, 220,0 g Polyester 4 und 92,0 g halbseitig mit Methylethylketoxim verkapptes Isophorondiisocyanat werden bei 60 °C gerührt, bis ein NCO-Gehalt von 0,1 % erreicht ist. Anschließend gibt man 21,6 g Dimethylethanolamin zu, rührt nochmals eine Stunde bei 60°C und dispergiert mit 460 g, auf 60 °C erwärmtem, entmineralisiertem Wasser.

**SUB 5**

Zu 1220 g Tetramethylxylylendiisocyanat (TMXDI) und 0,75 g DBTL gibt man unter Kühlung bei 25°C bis 30°C über einen Zeitraum von 75 min 435 g Methylethylketoxim, erhöht anschließend die Temperatur auf 40°C und rührt noch 1 h nach. Man erhält so das halbseitig methylethylketoximverkappte TMXDI.

45,0 g N-Methylpyrrolidon, 219,6 g Polyester 4 und 102,2 g halbseitig mit Methylethylketoxim verkapptes Tetramethylxylylendiisocyanat werden bei 60 °C gerührt, bis ein NCO-Gehalt von 0,1 % erreicht ist. Anschließend gibt man 36,2 g Triethanolamin (TOLA) zu, rührt nochmals eine Stunde bei 60°C und dispergiert mit 400 g, auf 60 °C erwärmtem, entmineralisiertem Wasser.

**SUB 6**

230,0 g Polyester 4, 44,0 g N-Methylpyrrolidon, 27,4 g Methylethylketoxim sowie 0,05 g Dibutylzinndilaurat werden bei 35 - 40 °C homogen gerührt und 69,8 g Isophorondiisocyanat so zudosiert, daß die Temperatur 65 °C nicht überschreitet. Man rührt bei 65 °C, bis ein NCO-Gehalt < 0,10 % erreicht ist. Nachfolgend gibt man bei 65 °C 22,6 g Dimethylethanolamin zu, rührt eine weitere Stunde und dispergiert mit 490 g auf 65 °C erwärmten, entmineralisiertem Wasser.

**Vergleichsbeispiel:**

119,0 g Methylethylketoxim-verkapptes Isophorondiisocyanat (Umsetzung von 1 mol Isophorondiisocyanat mit 2 mol Methylethylketoxim in Gegenwart von 0,15 g Dibutylzinndilaurat) wird mit 42,0 g N-Methylpyrrolidon und 220,0 g Polyester 4 bei 60 °C homogen gerührt, und bei dieser Temperatur mit 21,6 g Dimethylethanolamin versetzt. Man rührt eine weitere Stunde bei 60 °C und dispergiert mit 515,0 g auf 60 °C erwärmtem, entmineralisiertem Wasser.

**3. Beispiel für einen Einbrenn-Füller-Lack auf Basis von SUB 4 (Farbton hellgrau)**

| | Gew.-Teile |
|---|---|
| SUB 4 | 65,7 |
| Netz- u. Dispergierhilfsmittel ((R)Additol XL 250) | 0,3 |
| Verlaufsmittel ((R)Additol XW 390) | 0,4 |
| Titandioxid | 12,0 |
| Blanc fixe micro | 10,0 |
| Talkum Naintsch E 7 | 2,0 |
| Flammruß 101 | 0,1 |
| Wasser deion. | 9,5 |
| | 100,0 |
| Ergebnisse der Prüfungen : Vergleich Tabelle 4 | |

**4. Beispiel für einen wasserverdünnbaren Decklack auf Basis von SUB 5**

| | Gew.-Teile |
|---|---|
| SUB 5 | 68,6 |
| Netz- u. Dispergierhilfsmittel ((R)Additol XL 250) | 0,2 |
| Verlaufsmittel ((R)Additol XW 390) 25% in $H_2O$ | 0,5 |
| Lichtschutzmittel ((R)Sanduvor 3212) 50% in Butylglykol | 1,7 |
| Titandioxid | 23,5 |
| Wasser deion. | 5,5 |
| | 100,0 |

**Prüfergebnisse von SUB 5 im Decklack**

| Prüfung | 20' 130°C | 20' 150°C |
|---|---|---|
| Schichtdicke in µm | 31 | 31 |
| Glanz < 20°<br>< 60° | 76%<br>88% | 75%<br>89% |
| Pendelhärte in sec | 153 | 144 |
| Gitterschnitt auf Stahlblech | Gt 0 | Gt 0 |
| Erichsentiefung auf Stahlblech in mm | 9,9 | 9,9 |
| Lösungsmittelfestigkeiten<br>Aceton<br>Xylol<br>Ethanol / Wasser (1:1) | <br>< 20 sec<br>1 min<br>9 min | <br>< 20 sec<br>2 min<br>15 min |

**Prüfung im Gesamtaufbau ( KTL / Füller / Decklack )**

| Gitterschnitt | Gt 0 |
|---|---|
| Erichsentiefung in mm | 6 |

* KTL = Kathodische Tauchlackierung

Tabelle 1: Polyesterpolyole

| | | Komponenten | | | | | | | |
|---|---|---|---|---|---|---|---|---|---|
| | | IPS | TPS | ADPS | DMPS | 5-SIP-DME-Na | HD | NPG | TMP |
| Polyester 1 | Einwaage (g) | 891 | 445 | 706 | / | 312 | 1241 | 365 | 440 |
| | mol | 5,361 | 2,680 | 4,831 | / | 1,053 | 10,501 | 3,505 | 3,279 |
| | mol% | 13,0 | 6,5 | 11,7 | / | 2,5 | 25,5 | 32,8 | 8,0 |
| Polyester 2 | Einwaage (g) | 455 | 210 | 910 | 505 | / | 665 | 195 | 235 |
| | mol | 2,739 | 1,264 | 6,227 | 3,765 | / | 5,627 | 1,872 | 1,751 |
| | mol% | 11,8 | 5,4 | 26,8 | 16,2 | / | 24,2 | 8,1 | 7,5 |
| Polyester 3 | Einwaage (g) | 450 | 300 | 900 | 300 | / | 500 | 520 | 235 |
| | mol | 2,709 | 1,806 | 6,158 | 2,237 | / | 4,231 | 4,993 | 1,751 |
| | mol% | 11,3 | 7,6 | 25,8 | 9,4 | / | 17,7 | 20,9 | 7,3 |
| Polyester 4 | Einwaage (g) | 450 | 300 | 900 | 300 | / | 500 | 400 | 350 |
| | mol | 2,709 | 1,806 | 6,158 | 2,237 | / | 4,231 | 3,841 | 2,608 |
| | mol % | 11,5 | 7,7 | 26,1 | 9,5 | / | 17,9 | 16,3 | 11,0 |

| | Verhältnis OH/COOH | meq (COOH)/100 g | meq (OH)/100 g | |
|---|---|---|---|---|
| Polyester 1: | 1,359 | 7 | 223 | und 27 meq ($SO3^-Na^+$)/100 g |
| Polyester 2: | 1,147 | 90 | 204 | |
| Polyester 3: | 1,195 | 100 | 252 | |
| Polyester 4: | 1,206 | 110 | 273 | |

Die Abkürzungen werden in den Arbeitsvorschriften erläutert

Tabelle 2: Selbstvernetzende, urethanmodifizierte Bindemittel

| | Eingesetzter Polyester | Isocyanat-komponente | Verkappungs-mittel | Neutr.mittel (Neutr.grad %) | meq Säure-gruppen/100g *) | meq OH-Gruppen/100g *) | %Urethan (als NH-C(O)-O) *) | %verk. NCO (als -NCO) *) |
|---|---|---|---|---|---|---|---|---|
| SUB 1 | Polyester 1 | MDI | Malonsäure-diethylester | -Na-Salz ( 80%) | $-SO_3$ : 19<br>-COO : 5 | 77 | 4,56 | 3,24 |
| SUB 2 | Polyester 2 | IPDI | MEKoxim | TEA (100 %) | -COO : 53 | 60 | 4,55 | 3,24 |
| SUB 3 | Polyester 3 | IPDI | MEKoxim | DMEA (100 %) | -COO : 56 | 13 | 7,65 | 5,94 |
| SUB 4 | Polyester 4 | IPDI | MEKoxim | DMEA (100 %) | -COO : 78 | 96 | 5,68 | 4,04 |
| SUB 5 | Polyester 4 | TMXDI | MEKoxim | TOLA (100%) | -COO : 75 | 93 | 5,50 | 3,92 |
| SUB 6 | Polyester 4 | IPDI | MEKoxim | DMEA (100%) | -COO : 78 | 96 | 5,68 | 4,04 |
| Vergleich | Polyester 4 | IPDI Vollständig verkappt | MEKoxim | DMEA (100%) | -COO : 72 | 177 | / | 7,44 vom vollst. verk. IPDI |

*) : bezogen auf Festharz (Neutralisationsamin und Hilfslösemittel werden nicht zum Festharz gerechnet)

Die Abkürzungen werden in den Arbeitsvorschriften erläutert

**Tabelle 3: Lagerstabilitäten**

| | SUB1 | SUB2 | SUB3 | SUB4 | SUB5 | SUB6 | Vergleich |
|---|---|---|---|---|---|---|---|
| Lagerstabilitäten bei 40°C *) in Tagen | 30 | 16 | 35 | 25 | 26 | 35 | 7 |

*) : Ende der Lagerstabilität tritt mit beginnender Sedimentation ein

**Tabelle 4: Prüfergebnisse ausgewählter Beispiele als Automobilhydrofüller**

| Geprüftes Bindemittel | Einbrennbedingungen Füller / Decklack | Schichtdicke in µm Füller | Schichtdicke in µm Decklack | Pendelhärte in sec. | Glanzgrad < 20° | Glanzgrad < 60° | Decklack-haftung Kennwert * | Durch-schläge Kennwert ** | Decklack-stand Kennwert *** |
|---|---|---|---|---|---|---|---|---|---|
| SUB 2 | 15'165 °C / 17'140 °C | 24 | 30 | 100 | 19% | 62% | KW 2-3 | KW 1 | KW 3 |
| | 30'190 °C / 17'120 °C | 20 | 30 | 138 | 15% | 57% | KW 3 | KW 1 | KW 4 |
| SUB 4 | 15'165 °C / 17'140 °C | 35 | 27 | 130 | 67% | 89% | KW 2-3 | KW 0-1 | KW 2 |
| | 30'190 °C / 17'120 °C | 38 | 25 | 144 | 61% | 89% | KW 2-3 | KW 2 | n.b. |
| SUB 5 | 30'130 °C / 17'140 °C | 31 | 38 | 113 | 67% | 89% | KW 3 | KW 1 | KW 2 |
| | 15'165 °C / 17'140 °C | 32 | 40 | 121 | 60% | 87% | KW 3 | KW 0-1 | KW 1 |
| | 30'190 °C / 17'120 °C | 32 | 32 | 122 | 47% | 82% | KW 3 | KW 2 | n.b. |
| SUB 6 | 15'165 °C / 17'140 °C | 40 | 35 | 105 | 70% | 89% | KW 3 | KW 0 - 1 | KW 1 - 2 |
| | 30'190 °C / 17'120 °C | 40 | 35 | 138 | 62% | 88% | KW 2 - 3 | KW 0 - 1 | n.b. |

* Kennwertbeurteilung : - Kennwert 9= komplette Enthaftung
** Kennwertbeurteilung : - Kennwert 5= viele Durchschläge
*** Kennwertbeurteilung : Kennwert 1= sehr gut Kennwert 5 = mangelhaft
*** KW 1= sehr gut

## Patentansprüche

1. Verwendung von wasserverdünnbaren, urethanmodifizierten und Hydroxylgruppen enthaltenden Bindemitteln in Einbrennlacken, wobei die Bindemittel erhältlich sind durch Umsetzung eines Hydroxylgruppen und neutralisierte und/oder neutralisierbare Säuregruppen enthaltenden Polyesters und eines teilweise blockierten Polyisocyanats, wobei das Polyisocyanat in solchen Mengen eingesetzt wird, daß der Hydroxylgruppengehalt des Bindemittels 3 bis 350 mmol/100 g Festharz beträgt, und der Blockierungsgrad des Polyisocyanats so gewählt wird, daß der Massenanteil an blockierten Isocyanatgruppen (berechnet als NCO, molare Masse = 42 g/mol) im Festharz zwischen 0,5 und 15 % beträgt.

2. Verwendung nach Anspruch 1, dadurch gekennzeichnet, daß der Hydroxylgruppengehalt des Bindemittels 5 bis 170 mmol in 100 g Festharz beträgt.

3. Verwendung nach Anspruch 1, dadurch gekennzeichnet, daß der Massenanteil an Urethangruppen im Festharz des Bindemittels (berechnet als NH-C(O)O-, molare Masse = 59 g/mol) zwischen 0,5 und 20 % beträgt.

4. Verwendung nach Anspruch 1, dadurch gekennzeichnet, daß das Bindemittel neutralisierbare und/oder neutralisierte Carbonsäure- und/oder Sulfonsäure- und/oder Phosphonsäuregruppen enthält.

5. Verwendung nach Anspruch 1, dadurch gekennzeichnet, daß im Bindemittel die Summe der Mengen der neutralisierten und neutralisierbaren Säuregruppen zwischen 5 und 200 mmol pro 100 g Festharz liegt.

6. Verwendung nach Anspruch 1, dadurch gekennzeichnet, daß das Bindemittel weitere Überzugsmittel und/oder weitere Bindemittel Komponenten enthält.

7. Verwendung nach Anspruch 1 zum Beschichten von Automobilen.

8. Verwendung nach Anspruch 1 als Einbrenn-Decklack.

## Claims

1. The use of water-thinnable, urethane-modified and hydroxyl-containing binders in stoving enamels, the binders being obtainable by reacting a hydroxyl-containing polyester which also contains neutralized and/or neutralizable acid groups with a partially blocked polyisocyanate, the polyisocyanate being employed in amounts such that the hydroxyl content of the binder is from 3 to 350 mmol/100 g of solid resin, and the degree of blocking of the polyisocyanate being chosen such that the mass fraction of blocked isocyanate groups (calculated as NCO, molar mass = 42 g/mol) in the solid resin is between 0.5 and 15 %.

2. The use as claimed in claim 1, wherein the hydroxyl group content of the binder is from 5 to 170 mmol per 100 g of solid resin.

3. The use as claimed in claim 1, wherein the mass fraction of urethane groups in the solid resin of the binder (calculated as NH-C(O)O-, molar masss = 59 g/mol) is between 0.5 and 20 %.

4. The use as claimed in claim 1, wherein the binder contains neutralizable and/or neutralized carboxylic acid and/or sulfonic acid and/or phosphonic acid groups.

5. The use as claimed in claim 1, wherein the sum of the amounts of substance of neutralized and neutralizable acid groups in the binder is between 5 and 200 mmol per 100 g of solid resin.

6. The use as claimed in claim 1, wherein the binder comprises further coating materials and/or further binder components.

7. The use as claimed in claim 1 for coating automobiles.

8. The use as claimed in claim 1 as a stoving enamel.

**Revendications**

1. Utilisation de liants diluables à l'eau, modifiés par un uréthanne et comprenant des groupes hydroxyle dans des vernis au four, où les liants peuvent être obtenus par réaction d'un polyester contenant des groupes hydroxyle et des groupes acides neutralisés et/ou neutralisables, et d'un polyisocyanate partiellement bloqué, où le polyisocyanate est utilisé en des quantités telles que la teneur du liant en groupes hydroxyle est de 3 à 350 mmol /100 g de résine solide, et le degré de blocage du polyisocyanate est choisi tel que la teneur en masse dès groupes isocyanate bloqué (calculée en NCO, masse molaire 42 g/mol ), rapportée àla résiné solide, soit de 0,5 à 15 %.

2. Utilisation selon la revendication 1, caractérisée en ce que la teneur du liant en groupes hydroxyle est de 5 à 170 mmol pour 100 g de résine solide.

3. Utilisation selon la revendication 1, caractérisée en ce que la teneur en masse des groupes uréthanne, rapportée à la résine solide du liant (calculée en NH-C(O)O-, masse molaire 59 g/mol ) est de 0,5 à 20 %.

4. Utilisation selon la revendication 1, caractérisée en ce que le liant contient des groupes acide carboxylique et/ou acide sulfonique et/ou acide phosphonique neutralisables et/ou neutralisés.

5. Utilisation selon la revendication 1, caractérisée en ce que, dans le liant, la somme des quantités desubstance des groupes acides neutralisés et neutralisables est comprise entre 5 et 200 mmoles pour 100 g de résine solide.

6. Utilisation selon la revendication 1, caractérisée en ce que le liant contient d'autres agents de revêtement et/ou d'autres composants liants.

7. Utilisation selon la revendication 1 pour peindre des automobiles.

8. Utilisation selon la revendication 1 en tant que vernis de finition au four.